# EUROPÄISCHE PATENTANMELDUNG

(11) **EP 2 915 668 A1**
(43) Veröffentlichungstag der Anmeldung: **09.09.2015**
(21) Anmeldenummer: 14157940.9
(22) Anmeldetag: 05.03.2014
(51) Int. Cl.: B32B 27/32, G09F 3/10

(54) **Etikettenfolienlaminat, Verfahren zur Herstellung eines Etikettenfolienlaminates sowie Verpackung mit einem Verpackungskörper und einem Folienetikett**

(71) Anmelder: Mondi Gronau GmbH, 48599 Gronau (DE)
(72) Erfinder: DENIS, Norbert, 48619 Heek (DE); NIEPELT, Ralf, 48599 Gronau (DE); KUCKERTZ, Christian, Dr., 57462 Olpe (DE)
(74) Vertreter: Lorenz, Bernd Ingo Thaddeus

(57) **Zusammenfassung**

Die Erfindung betrifft ein Etikettenfolienlaminat mit einem Träger (1) und einer von dem Träger (1) ablösbaren stanz- und bedruckbaren sowie extrudierten Etikettenfolie (2) aus Polyethylen. Erfindungsgemäß ist die Etikettenfolie (2) in Produktionsrichtung durch eine Verstreckung orientiert, wobei die Dicke der Etikettenfolie (2) weniger als 70 µm beträgt. Gegenstand der Erfindung ist auch ein Verfahren zur Herstellung des Etikettenfolienlaminates sowie eines Verpackung mit einem Verpackungskörper und einem durch Klebstoff befestigten und bedruckten Folienetikett aus Polyethylen.

## Beschreibung

Die Erfindung betrifft ein Etikettenfolienlaminat mit einem Träger und einer von dem Träger ablösbaren, stanz- und bedruckbaren sowie extrudierten Etikettenfolie aus Polyethylen.

Die vorliegende Erfindung bezieht sich auf Etikettenfolienlaminate, bei denen aus der Etikettenfolie gestanzte Folienetiketten von dem Träger abgezogen und üblicherweise durch Klebstoff auf einem Verpackungskörper befestigt werden. Gegenstand der Erfindung sind vor diesem Hintergrund auch ein Verfahren zur Herstellung eines Etikettenfolienlaminates sowie eine Verpackung mit einem Verpackungskörper und einem durch Klebstoff befestigten und bedruckten Folienetikett aus Polyethylen.

Die vorliegende Erfindung bezieht sich auf Etikettenfolienlaminate, die für eine Verarbeitung in einer üblichen Etikettiervorrichtung geeignet sind, wobei die Trennung der einzelnen aus der Etikettenfolie ausgestanzten Folienetiketten von dem Träger durch ein Abwinkeln und eine abschließende Abziehbewegung des Trägers erfolgt.

Zu diesem Zweck muss die Etikettenfolie eine ausreichende Biegesteifigkeit aufweisen, wobei gleichzeitig aus Kostengründen sowohl eine geringe Foliendicke als auch der Einsatz möglichst kostengünstiger Rohstoffe angestrebt werden. Ferner muss die Etikettenfolie gute Stanzeigenschaften aufweisen und auch bedruckbar sein. Insbesondere bei höherwertigen Produkten soll die Etikettenfolie auch ein hochwertiges Aussehen aufweisen, um einen Aufdruck gut zur Geltung zu bringen.

Dabei ist zu berücksichtigen, dass die beschriebenen Eigenschaften in einem gewissen Maße gegenläufig sind. Um die Etikettenfolie bis auf den Träger sicher stanzen zu können, ist ein vergleichsweise weiches, nachgiebiges Material von Vorteil, wobei dann jedoch nur eine geringe Biegesteifigkeit resultiert. Wenn dagegen für die gesamte Etikettenfolie ein hartes, starkes Material eingesetzt wird, ist das Stanzen der Etikettenfolie erschwert. Insbesondere muss in der Praxis sichergestellt werden, dass zwar die einzelnen Folienetiketten um ihren Umfang vollständig herausgetrennt sind, während jedoch der darunter liegende Träger nicht übermäßig beschädigt werden darf. Durch eine geeignete Ausgestaltung der Etikettenfolie kann vor diesem Hintergrund auch ein besonders dünner und damit kostengünstiger Träger eingesetzt werden.

Eine Etikettenfolie mit den eingangs beschriebenen Merkmalen ist aus EP 1 543 955 B1 bekannt. Bei der vollständig aus Polyethylen bestehenden Etikettenfolie kann eine Reduzierung der Gesamtdicke dadurch erreicht werden, dass zwischen zwei äußeren Deckschichten aus einem Polyethylen hoher Dichte (MDPE) mit einer Dichte von mehr als 0,945 g/cm³ eine Kernschicht aus einem Polyethylen niedriger Dichte mit einer Dichte von weniger als 0,945 g/cm³ vorgesehen ist, wobei die äußeren Schichten eine Schichtdicke von mindestens 15 µm aufweisen.

Die beschriebene Ausgestaltung beruht auf der Erkenntnis, dass Polyethylen hoher Dichte gegenüber Polyethylen niedriger Dichte steifer ist, wobei die Verwendung eines steifen Materials in den äußeren Zonen einen größeren Einfluss auf die Biegesteifigkeit der Etikettenfolie hat. Bei einem Biegen der Folie werden nämlich die Außenseiten stärker gedehnt oder gestaucht, während die Verformung um eine mittige neutrale Faser vergleichsweise gering ist.

Die aus der EP 1 543 955 B1 bekannte Etikettenfolie zeichnet sich durch gute mechanische Eigenschaften bei einer relativ geringen Gesamtdicke aus.

Eine mehrschichtige Extrusionsfolie für ein Etikettenfolienlaminat ist aus der EP 1 298 627 A2 bekannt. Die Extrusionsfolie ist asymmetrisch aus zwei Schichten gebildet, wobei eine Außenschicht auf einer der Seiten der Extrusionsfolie HDPE als Beimischung mit einem Anteil von maximal 40 Gew.-% aufweist. Der Hauptbestandteil ist LDPE. Die Unterschicht aus weichem LDPE bildet die Rückseite der Etikettenfolie ist und mit druckempfindlichem Klebstoff beschichtet.

Handelsübliche Polyethylenfolien, die als Etikettenfolien in einem Etikettenfolienlaminat eingesetzt werden, weisen typischerweise eine Dicke zwischen 80 µm und 90 µm auf, wobei die einzelnen Schichten jeweils aus einem Blend von Polyethylen niedriger Dichte (LDPE) und Polyethylen hoher Dichte (HDPE) gebildet sind. Hauptbestandteil der einzelnen Schichten ist dabei LDPE, wobei HDPE üblicherweise mit einem Anteil von weniger als 30 Gew.-% beigemischt ist.

Um besonders dünne Etikettenfolien zu erhalten, können auch verschiedene olefinische und nicht-olefinische Kunststoffe in aufeinanderfolgenden Schichten miteinander kombiniert werden, wobei dann jedoch das Folienetikett nicht mehr sortenrein ist, wodurch auch ein Recycling erschwert wird.

So ist aus der US 4 946 532 ein Etikettenfolienlaminat bekannt, bei dem die Etikettenfolie aus einer dreischichtigen, durch Coextrusion hergestellten Extrusionsfolie mit einer Kernschicht aus Polyethylen und nicht-olefinischen Skinlagen gebildet ist.

Aus US 6 040 027 ist eine mehrschichtige Etikettenfolie bekannt, deren Kernschicht aus Polypropylen oder einem Polypropylen-Copolymer mit darin eingelagerten Feststoffen besteht. Durch die feinteiligen Feststoffe, die in einer Menge von bis zu 40 Gew.-% zugegeben werden, ist die Biegesteifigkeit der Etikettenfolie beeinflusst. An die Kernschicht schließen ein- oder beidseitig Skinlagen aus einem nicht-olefinischen Polymer, vorzugsweise aus Ethylen-Vinyl-Acetat an. Die Dicke der Etikettenfolie liegt zwischen 38 µm und 165 µm.

Neben den Etikettenfolienlaminaten mit einem Träger und einer von dem Träger ablösbaren Etikettenfolie, die mit Klebstoff an einem Verpackungskörper befestigt werden, sind aus der Praxis auch Etiketten bekannt, welche aufgeschrumpft werden. Dabei handelt es sich um einen grundlegend anderen Ansatz, bei dem die Etikettenfolie ohne einen Träger zugeführt und in der Regel zunächst zu einer Banderole geformt wird. Eine solche Banderole kann dann um einen Verpackungskörper, beispielsweise eine Flasche gelegt werden, wobei die so gebildete Banderole nachfolgend durch Temperatureinwirkung eng auf das Maß des Verpackungskörper geschrumpft wird.

Um eine solche schrumpfbare Folie zu erhalten, wird gemäß der US 4 946 532 ein spezieller Schichtaufbau mit einer Kernschicht aus Butadien-Styrol-Copolymer und mit Außenschichten auf der Basis von Polypropylen gebildet und in einer Produktionsrichtung verstreckt.

Der vorliegenden Erfindung liegt die Aufgabe zugrunde, ein für den Einsatz in üblichen Etikettiervorrichtungen geeignetes Etikettenfolienlaminat anzugeben, welches mit möglichst geringem Materialaufwand und damit auch kostengünstig gefertigt werden kann. Des Weiteren sollen ein Verfahren zur Herstellung des Etikettenfolienlaminates sowie eine Verpackung mit einem entsprechenden Folienetikett angegeben werden.

Gegenstand der Erfindung und Lösung der Aufgabe sind ein Etikettenfolienlaminat gemäß Patentanspruch 1, ein Verfahren zur Herstellung eines Etikettenfolienlaminates gemäß Patentanspruch 9 sowie eine Verpackung gemäß Patentanspruch 14.

Ausgehend von einem eingangs beschriebenen Etikettenfolienlaminat mit einem Träger und einer von dem Träger ablösbaren, stanz- und bedruckbaren sowie extrudierten Etikettenfolie aus Polyethylen ist erfindungsgemäß vorgesehen, dass die Etikettenfolie in einer Produktionsrichtung durch eine Verstreckung orientiert ist und dass die Dicke der Etikettenfolie weniger als 70 µm beträgt.

Die Etikettenfolie ist aus Polyethylen sortenrein oder im Wesentlichen sortenrein gebildet, wobei jedoch übliche Zusatzstoffe, Additive und Verarbeitungshilfsmittel enthalten sein können, deren Gewichtsanteil in der Regel weniger als 15 %, vorzugsweise weniger als 5 %, beträgt. Die Produktionsrichtung wird auch als Maschinenrichtung bezeichnet, so dass die Etikettenfolie in Maschinenrichtung orientiert sind (MDO - machine direction orientation).

Auch wenn vorzugsweise Polyethylentypen unterschiedlicher Dichte in aufeinander folgenden Schichten und/oder innerhalb der einzelnen Schichten selbst kombiniert werden, ist ein Recycling der Etikettenfolie gut möglich. Dies gilt insbesondere, wenn die Etikettenfolie gemäß einem weiteren Aspekt der vorliegenden Erfindung bei einer Verpackung durch Klebstoff an einem Verpackungskörper befestigt ist, der ebenfalls aus Polyethylen gebildet ist, so dass dann die gesamte Verpackung bestehend aus Verpackungskörper und Folienetikett wiederverwertet werden kann.

Der vorliegenden Erfindung liegt die Erkenntnis zugrunde, dass bei einer vollständig aus Polyethylen gebildeten Etikettenfolie die Biegesteifigkeit in Produktrichtung durch die Verstreckung signifikant erhöht werden kann. Die Etikettenfolie weist gemäß einer bevorzugten Ausgestaltung der Erfindung eine Verstreckung, das heißt, eine durch die Verstreckung bedingte Längenzunahme von mehr als 400 %, insbesondere zwischen 500 % und 650 % auf. Der Grad der Verstreckung kann bei der Etikettenfolie als Endprodukt durch eine Strukturanalyse und/oder auch orientierende Versuche leicht bestimmt werden.

Vorzugsweise ist die Etikettenfolie lediglich in Produktionsrichtung unidirektional verstreckt, wobei gerade die Steifheit in Produktionsrichtung für das Abziehen der aus der Etikettenfolie ausgestanzten Folienetiketten von dem Träger in einer Etikettiervorrichtung relevant ist, wenn dort das Etikettenfolienlaminat entlang der Produktionsrichtung der Etikettenfolie transportiert und abgewinkelt wird, um die einzelnen Folienetiketten von dem Träger abzuheben.

Bei einer unidirektionalen Ausrichtung durch ein Verstrecken in Produktionsrichtung ergibt sich hinsichtlich der Biegesteifigkeit der Etikettenfolie eine ausgeprägte Anisotropie. Die in Querrichtung nicht-orientierte Etikettenfolie bleibt in Querrichtung flexibel und anschmiegsam, wodurch sich die Folienetiketten auch einem in diese Richtung gebogenen Verpackungskörper leicht anpassen können. Gegebenenfalls ist der Verpackungskörper in geeigneter Weise gegenüber den zugeführten Folienetiketten auszurichten.

Im Gegensatz zu einer Versteifung der Etikettenfolie durch den Einsatz eines besonders steifen Materials wird durch die lediglich unidirektionale Erhöhung der Biegesteifigkeit durch das Verstrecken die Stanzbarkeit der Etikettenfolie nicht wesentlich beeinträchtigt.

Um darüber hinaus hinsichtlich der Stanzbarkeit, der Foliendicke und der Biegesteifigkeit eine geeignete Abstimmung zu erreichen, ist gemäß einer bevorzugten Ausgestaltung der Erfindung vorgesehen, dass die gesamte Etikettenfolie zwischen 40 und 80 Gew.-% Polyethylen hoher Dichte (HDPE) mit einer Dichte von mehr als 0,946 g/cm³ und zwischen 20 und 60 Gew.-% lineares Polyethylen mit einer Dichte von weniger 0,94 g/cm³, insbesondere LMDPE, LLDPE, VLDPE aufweist.

Bei einer bevorzugt mehrschichtigen Ausgestaltung der Etikettenfolie können die unterschiedlichen Polyethylentypen entweder als Abmischung in den einzelnen Schichten oder auch in unterschiedlichen Schichten eingesetzt werden. Die Etikettenfolie wird zweckmäßigerweise mehrschichtig durch Blas- oder Castfolienextrusion coextrudiert. Dabei ist ein symmetrischer Schichtaufbau bevorzugt, um auch eine Rollneigung der Etikettenfolie zu vermeiden.

Die zuvor beschriebene Kombination von HDPE einerseits und linearen PE mit einer Dichte von weniger als 0,94 g/cm³ andererseits gewährleistet, dass die Etikettenfolie die gewünschten mechanischen Eigenschaften aufweist. Das HDPE trägt zusammen mit der erfindungsgemäßen Verstreckung zu einer hohen Biegesteifigkeit in Produktionsrichtung bei, während sich durch den Anteil von LMDPE, LLDPE bzw. VLDPE die optischen Eigenschaften verbessern und eine zu harte bzw. zu spröde Ausgestaltung der Etikettenfolie vermieden wird. Das lineare Polyethylen mit einer Dichte von weniger als 0,94 g/cm³ führt zu einer guten Stanzbarkeit der Etikettenfolie, wobei auch ein zu starkes Spleißen der Etikettenfolie bei der Verarbeitung verhindert wird.

Bezogen auf die gesamte Folie beträgt der Anteil an HDPE besonders bevorzugt zwischen 50 % und 70 %, während der Anteil des linearen

Polyethylen mit einer Dichte von weniger als 0,94 g/cm³ besonders bevorzugt zwischen 30 Gew.-% und 50 Gew.-% beträgt.

Im Rahmen der Erfindung kann insbesondere vorgesehen sein, dass bei einem zumindest dreischichtigen Aufbau der Etikettenfolie die jeweils eine Oberfläche der Etikettenfolie bildenden Außenschichten vollständig aus Polyethylen hoher Dichte (HDPE) gebildet sind.

Durch die erfindungsgemäße Verstreckung können auch die optischen Eigenschaften der Etikettenfolie verbessert werden. Beispielsweise wird häufig eine möglichst klare Folie gewünscht, wobei gerade Etikettenfolien aus Polyethylen in der Regel eine deutlich wahrnehmbare Trübung aufweisen.

Im Rahmen der Erfindung kann ein Etikettenfolienlaminat bereitgestellt werden, bei dem die Etikettenfolie eine ASTM D 1003 von weniger als 30 % aufweist. Vorzugsweise liegt die Trübung in einem Bereich zwischen 20 % und 30 %.

Während eine Oberfläche der Etikettenfolie mit dem Träger kaschiert ist, wird die andere, gegenüberliegende und bei dem Etikettenfolienlaminat freiliegende Oberfläche in der Regel mit einem Aufdruck versehen. Grundsätzlich ist es jedoch auch denkbar, dass die dem Träger zugewandte Oberfläche der Etikettenfolie mit einem Aufdruck versehen wird, bevor eine Kaschierung mit dem Träger erfolgt, so dass dann der Aufdruck im applizierten Zustand unterhalb der Etikettenfolie verdeckt angeordnet ist.

Als Klebstoff wird üblicherweise ein permanent klebender Haftklebstoff eingesetzt, mit dem die Etikettenfolie zunächst auf dem Träger und dann auf einem zu kennzeichnenden Gegenstand, insbesondere einem Verpackungskörper gehalten ist. Grundsätzlich kommen aber auch Klebstoffe in Betracht, welche nach der Applizierung des Folienetikettes aushärten, so dass dann die Haftfestigkeit des Folienetikettes auf dem zu kennzeichnenden Gegenstand erhöht ist.

Um die Haftung eines Aufdruckes und/oder von Klebstoff zu verbessern, kann zumindest eine der Oberflächen der Etikettenfolie eine Oberflächenbehandlung, insbesondere durch eine Korona-Entladung, aufweisen. Dabei ergibt sich der Vorteil, dass die ohnehin vergleichsweise relativ gute Bedruckbarkeit von Polyethylen weiter verbessert wird.

Schließlich kann an zumindest einer Oberfläche der Etikettenfolie auch eine nachträgliche Beschichtung erfolgen, wozu beispielsweise ein Acrylpolymer eingesetzt werden kann. Eine solche Beschichtung kann sehr dünn aufgetragen werden, wobei die Dicke der nachträglich aufgebrachten Schicht im Vergleich zu der Dicke der Etikettenfolie selbst in der Regel vernachlässigbar ist und auch die mechanischen Eigenschaften nicht wesentlich verändert. Die Schichtdicke einer zusätzlichen Beschichtung kann beispielsweise zwischen 0,1 µm bis 5 µm betragen.

Durch die Verstreckung von vorzugsweise mehr als 400 % und eine geeignete Auswahl an Polyethylen-Typen kann die Dicke gegenüber aus dem Stand der Technik bekannten Etikettenfolien aus Polyethylen weiter reduziert werden, wobei die erfindungsgemäße Etikettenfolie insbesondere eine Dicke zwischen 40 µm und 60 µm aufweisen kann.

Gegenstand der Erfindung ist des Weiteren ein Verfahren zur Herstellung eines Etikettenfolienlaminates, insbesondere zur Herstellung des zuvor beschriebenen Etikettenfolienlaminates. Dabei wird auf der Basis von Polyethylen eine Extrusionsfolie in eine Produktionsrichtung extrudiert, wobei die Extrusionsfolie nach einem Abkühlen bei einer Temperatur unterhalb einer Schmelztemperatur zur Bildung einer Etikettenfolie durch ein Verstrecken in Produktionsrichtung derart uniaxial orientiert wird, dass der Grad der Verstreckung bezogen auf die Ausgangslänge der Extrusionsfolie zumindest 400 % beträgt. Im Rahmen der Erfindung wird die Verstreckung auf die Längenzunahme im Vergleich zu der Ausgangslänge bezogen. Eine Verstreckung von 100 % entspricht also einem Verhältnis von 2:1 der resultierenden Länge im Vergleich zu der Ausgangslänge. Eine Verstreckung von 400 % entspricht demnach einem Verhältnis von 5:1. Entsprechend beträgt das Verhältnis der Dicke der Extrusionsfolie zu der Dicke der Etikettenfolie zumindest 5:1. Die Etikettenfolie wird sodann mit Klebstoff, insbesondere Permanentklebstoff, auf einen Träger kaschiert.

Das so gebildete Etikettenfolienlaminat kann dann an der dem Träger gegenüberliegenden Oberfläche - gegebenenfalls nach einer Oberflächenbehandlung - bedruckt und gestanzt werden, um danach einzelne Folienetiketten abtrennen zu können.

Im Rahmen des erfindungsgemäßen Verfahrens ist vorzugsweise vorgesehen, dass die Extrusionsfolie zunächst mit einer Dicke zwischen 250 µm und 450 µm extrudiert wird, wobei dann die durch das uniaxiale Verstrecken der Extrusionsfolie gebildete Etikettenfolie eine Dicke zwischen 40 µm und 60 µm aufweist.

Für das Verstrecken der Extrusionsfolie ist wesentlich, dass dieser Verfahrensschritt bei einer Temperatur erfolgt, der unterhalb einer Schmelztemperatur liegt. Abgesehen davon, dass die Extrusionsfolie bzw. Etikettenfolie bei einer zu hohen Temperatur zerreißen kann, ist für die Orientierung auch ausschlaggebend, dass die Polymerketten sich nicht wie im schmelzflüssigen Zustand vollständig frei ausrichten können. Durch ein Verstrecken in dem angegebenen Temperaturbereich kann aber erreicht werden, dass die Dehnung der Extrusionsfolie besonders gleichmäßig und leicht erfolgen kann.

Gemäß einem weiteren Aspekt der Erfindung kann das Verfahren so durchgeführt werden, dass in einem Blasfolien-Coextrusionsverfahren eine Folienblase gebildet wird, wobei durch Flachlegen der Folienblase und eine Verbindung der in der Folienblase innenliegenden Schicht mit sich selbst die Extrusionsfolie mit einem symmetrischen Schichtaufbau gebildet wird. Insbesondere kann die in der Folienblase innen liegende Schicht aus einem Material gebildet sein kann, welches aufgrund seiner Klebrigkeit bei einem Flachlegen der Folienblase mit sich selbst verblockt, wozu im Rahmen der Erfindung Polyethylen ultraniedriger Dichte (ULDPE) mit einer Dichte von weniger 0,9 g/cm³ vorgesehen sein kann.

Die Erfindung wird im Folgenden anhand von Figuren und Ausführungsbeispielen exemplarisch erläutert. Es zeigen:
- Fig. 1: einen Schnitt durch ein Etikettenfolienlaminat mit einer Etikettenfolie und einem Träger,
- Fig. 2 und 3: jeweils einen Schnitt durch eine alternative Ausgestaltung der Etikettenfolie.

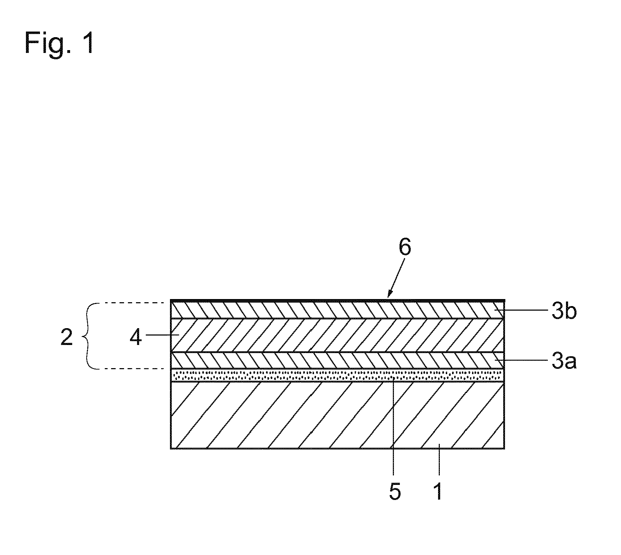

Die Fig. 1 zeigt ein Etikettenfolienlaminat mit einem Träger 1 und einer von dem Träger 1 ablösbaren, stanz- und bedruckbaren sowie extrudierten Etikettenfolie 2 aus Polyethylen. Die Etikettenfolie 2 weist einen dreischichtigen symmetrischen Aufbau mit zwei Außenschichten 3a, 3b und einer dazwischen angeordneten Kernschicht 4 auf. Die Etikettenfolie 2 ist an einer von einer der Außenschichten 3a gebildeten Oberfläche mit einem selbstklebenden Permanentklebstoff 5 beschichtet und auf dem Träger 1 angeordnet, wobei der Träger 1 optional mit einer nicht dargestellten Release-Schicht versehen sein kann.

Die dem Träger 1 gegenüberliegende, von der zweiten Außenschicht 3b gebildete Oberfläche ist dagegen mit einem Aufdruck 6 versehen.

Um die Haftung des Permanentklebstoffes 5 und/oder des Aufdruckes 6 zu verbessern, können die entsprechenden Oberflächen beispielsweise durch eine Korona-Entladung behandelt oder mit einer nicht dargestellten dünnen Beschichtung versehen sein.

In dem dargestellten Ausführungsbeispiel beträgt die Gesamtdicke der Etikettenfolie 50 µm, wobei die beiden Außenschichten 3a, 3b bei einem symmetrischen Schichtaufbau jeweils eine Dicke von knapp 10 µm und die Kernschicht 4 entsprechend eine Dicke von gut 30 µm aufweisen.

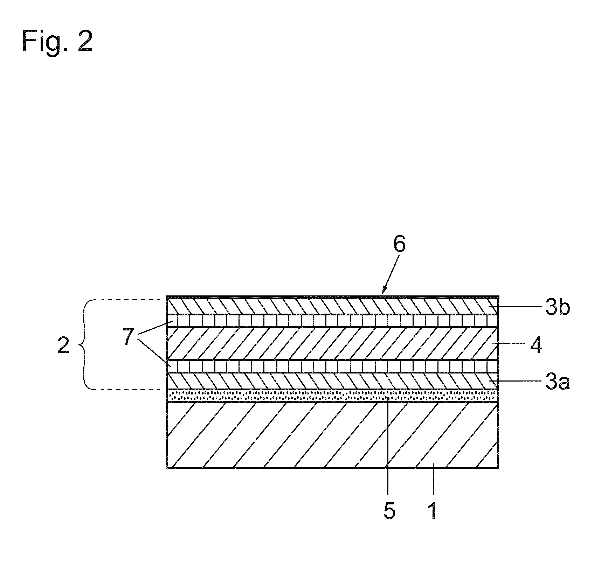

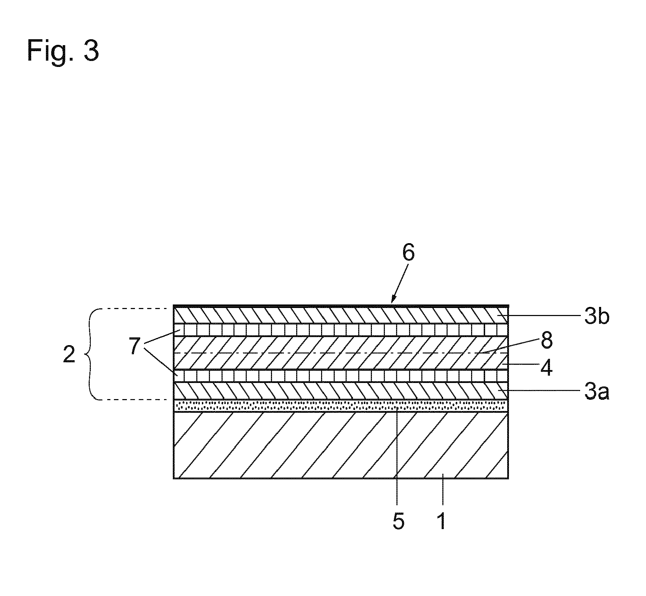

Die Fig. 2 und 3 zeigen alternative Ausgestaltungen der Etikettenfolie 2 mit einem fünfschichtigen Aufbau, wobei bei einem symmetrisch angeordneten Schichtaufbau zwischen jeder der beiden Außenschichten 3a, 3b und der Kernschicht 4 jeweils eine Zwischenschicht 7a, 7b vorgesehen ist. In der Fig. 3 ist des Weiteren in der Kernschicht 4 eine Mittellinie 8 angedeutet, die nachfolgend im Zusammenhang mit dem dritten Beispiel erläutert wird.

### Beispiel 1:

Zur Herstellung der in Fig. 1 dargestellten Etikettenfolie 2 wurde zunächst durch Castfoliencoextrusion eine symmetrische dreischichtige Extrusionsfolie gebildet, die an den beiden gegenüberliegenden Außenschichten ausschließlich HDPE mit einer Dichte von 0,952 g/cm³ sowie einem Schmelzfluss MFI von 2,4 g/10 min bei 190°C/2,16 kg gemäß ISO 1133 aufweist. Beide Außenschichten haben bei der Extrusionsfolie eine Dicke von 62,5 µm.

Eine mittige Kernschicht besteht zu 45 Gew.-% aus HDPE mit einer Dichte von 0,952 g/cm³ und einem MFI von 2,4 g/min bei 190 °C/2,16 kg gemäß ISO 1133, 45 % Gew.-% eines linearen, vorzugsweise mit Hilfe von in einem Metallocen-Katalysatoren gewonnenen Polyethylen mittlerer Dichte (mLMDPE) mit einer Dichte von 0,935 g/cm³ und einem MFI von 1,4 g/min bei 190 °C/2,16 kg gemäß ISO 1133 und 10 Gew.-% eines durch Metallocen-Katalysatoren gewonnenen Polyethylens sehr niedriger Dichte (mVLDPE) mit einer Dichte von 0,902 g/cm³ und einem MFI von 1,0 g/min bei 190 °C/2,16 kg gemäß ISO 1133.

Sämtliche Schichten können in üblicherweise Zusätze wie Verarbeitungshilfsmittel, Additive, Füllstoffe, Farbmittel oder dergleichen enthalten. Bei einer Dicke der Kernschicht von 200 µm ergibt sich für die Extrusionsfolie eine Gesamtdicke von 325 µm.

Die so gebildete Extrusionsfolie wird in Produktionsrichtung um 550 % verstreckt, so dass sich die in Fig. 1 dargestellte unidirektional orientierte Etikettenfolie 2 mit einer Gesamtdicke von 50 µm ergibt.

### Beispiel 2:

Zur Bildung der in Fig. 2 dargestellten fünfschichtigen Etikettenfolie 2 wurden bei einem symmetrischen Schichtaufbau fünf Schichten auf einer Castfolienanlage coextrudiert, wobei die beiden Außenschichten der so gebildeten Extrusionsfolie zu 100 % aus HDPE mit einer Dichte von 0,952 g/cm³ mit einem MFI von 2,4 g/min bei 190 °C/2,16 kg gemäß ISO 1133 gebildet sind. In der Extrusionsfolie weisen die beiden Außenschichten jeweils eine Dicke von 70 µm auf.

Eine Kernschicht ist ebenfalls zu 60 Gew.-% aus HDPE mit einer Dichte von 0,952 g/cm³ und einem MFI von 2,4 g/min bei 190 °C/2,16 kg gemäß ISO 1133 sowie zu 40 Gew.-% aus mLMDPE mit einer Dichte von 0,935 g/cm³ und einem MFI von 1,4 g/min bei 190 °C/2,16 kg gemäß ISO 1133 gebildet. Die jeweils zwischen der Kernschicht und einer der Außenschichten vorgesehenen Zwischenschichten bestehen zu 85 Gew.-% aus mLMDPE mit einer Dichte von 0,935 g/cm³ und einem MFI von 1,4 g/min bei 190 °C/2,16 kg gemäß ISO 1133 und 15 Gew.-% aus mVLDPE mit einer Dichte von 0,902 g/cm³ und einem MFI von 1,5 g/min bei 190 °C/2,16 kg gemäß ISO 1133. Die so gebildete Extrusionsfolie mit einer Gesamtdichte von 325 µm wird in Produktionsrichtung um 550 % verstreckt, so dass sich die in Fig. 2 dargestellte unidirektional orientierte Etikettenfolie 2 mit einer Gesamtdicke von 50 µm ergibt.

### Beispiel 3:

Die Fig. 3 zeigt dagegen ein alternatives Herstellungsverfahren auf einer Blasfolienanlage, wobei zunächst eine Folienblase einer dreischichtigen Folie gebildet wird und wobei dann durch ein Flachlegen der Folienblase und eine Verbindung der in der Folienblase innen liegenden Schicht mit sich selbst die in Fig. 3 dargestellte Extrusionsfolie mit symmetrischem Schichtaufbau gebildet wird. Die durch die Verbindung mit sich selbst gebildete Kernschicht der Extrusionsfolie besteht aus Polyethylen ultraniedriger Dichte (ULDPE) mit einer Dichte von 0,870 g/cm³ auf, wobei die Kernschicht in der Extrusionsfolie eine Dicke von 64 µm aufweist.

An beiden Seiten der Kernschicht schließt jeweils eine Zwischenschicht aus bimodalem linearen Polyethylen mittlerer Dichte an, wobei das bimodale LMDPE eine Dichte von 0,931 g/cm³ aufweist und wobei die Schichtdicke der Zwischenschicht in der Extrusionsfolie 85,5 µm beträgt.

Die Außenschichten sind aus HDPE mit einer Dichte von 0,957 g/cm³ gebildet, wobei die Dicke der Außenschichten in der Extrusionsfolie 45 µm beträgt. Wie bei den beiden zuvor beschriebenen Ausführungsbeispielen wird also zunächst eine Extrusionsfolie mit einer Dicke von 325 µm gebildet, welche sodann durch eine uniaxiale Verstreckung in Produktionsrichtung zu der Etikettenfolie 2 mit einer Dicke von 50 µm umgeformt wird.

## Patentansprüche

1. Etikettenfolienlaminat mit einem Träger (1) und einer von dem Träger (1) ablösbaren, stanz- und bedruckbaren sowie extrudierten Etikettenfolie (2) aus Polyethylen, **dadurch gekennzeichnet, dass** die Etikettenfolie (2) in einer Produktionsrichtung durch eine Verstreckung orientiert ist und dass die Dicke der Etikettenfolie (2) weniger als 70 µm beträgt.

2. Etikettenfolienlaminat nach Anspruch 1, **dadurch gekennzeichnet, dass** die Etikettenfolie (2) eine Verstreckung von mehr als 400 % aufweist.

3. Etikettenfolienlaminat nach Anspruch 1 oder 2, **dadurch gekennzeichnet, dass** die gesamte Etikettenfolie (2) zwischen 40 und 80 Gew.-% Polyethylen hoher Dichte (HDPE) mit einer Dichte von mehr als 0,946 g/cm³ und zwischen 20 und 60 Gew.-% lineares Polyethylen mit einer Dichte von weniger als 0,94 g/cm³ aufweist.

4. Etikettenfolienlaminat nach einem der Ansprüche 1 bis 3, **dadurch gekennzeichnet, dass** die Etikettenfolie (2) mehrschichtig coextrudiert ist, vorzugsweise mit symmetrischem Schichtaufbau zumindest dreischichtig.

5. Etikettenfolienlaminat nach Anspruch 4, **dadurch gekennzeichnet, dass** die Etikettenfolie (2) Außenschichten (3a, 3b) aus Polyethylen hoher Dichte (HDPE) aufweist.

6. Etikettenfolienlaminat nach einem der Ansprüche 1 bis 5, **dadurch gekennzeichnet, dass** die Etikettenfolie (2) eine Trübung gemäß ASTM D 1003 von weniger als 30 % aufweist.

7. Etikettenfolienlaminat nach einem der Ansprüche 1 bis 6, **dadurch gekennzeichnet, dass** zumindest eine Oberfläche durch eine Korona-Entladung behandelt ist.

8. Etikettenfolienlaminat nach einem der Ansprüche 1 bis 7, **dadurch gekennzeichnet, dass** die Etikettenfolie (2) eine Dicke zwischen 40 µm und 60 µm aufweist.

9. Verfahren zur Herstellung eines Etikettenfolienlaminates, insbesondere eines Etikettenfolienlaminates nach einem der Ansprüche 1 bis 8,
wobei auf der Basis von Polyethylen eine Extrusionsfolie in eine Produktionsrichtung extrudiert wird,
wobei die Extrusionsfolie nach einem Abkühlen bei einer Temperatur unterhalb einer Schmelztemperatur zur Bildung einer Etikettenfolie (2) durch ein Verstrecken in Produktionsrichtung derart uniaxial orientiert wird, dass der Grad der Verstreckung bezogen auf die Ausgangslänge der Extrusionsfolie zumindest 400 % beträgt und
wobei die Extrusionsfolie mit Klebstoff auf einen Träger (1) kaschiert wird.

10. Verfahren nach Anspruch 9, wobei die Extrusionsfolie mit einer Dicke zwischen 250 µm und 400 µm extrudiert wird und wobei die durch das uniaxiale Verstrecken der Extrusionsfolie gebildete Etikettenfolie (2) eine Dicke zwischen 40 µm und 60 µm aufweist.

11. Verfahren nach Anspruch 9 oder 10, wobei die Extrusionsfolie für das Verstrecken auf eine Temperatur zwischen 115 °C und 125 °C gebracht wird.

12. Verfahren nach einem der Ansprüche 9 bis 11, wobei in einem Blasfolien-Coextrusionsverfahren eine Folienblase gebildet wird und wobei durch Flachlegen der Folienblase und eine Verbindung der in der Folienblase innen liegenden Schicht mit sich selbst die Extrusionsfolie mit einem symmetrischen Schichtaufbau gebildet wird.

13. Verfahren nach Anspruch 12, wobei eine von der innenliegenden Schicht der Folienblase gebildete Kernschicht (4) der Extrusionsfolie aus Polyethylen ultraniedriger Dichte (ULDPE) mit einer Dichte von weniger als 0,91 g/cm³ besteht.

14. Verpackung mit einem Verpackungskörper und einem durch Klebstoff befestigten und bedruckten Folienetikett aus Polyethylen, **dadurch ge-kennzeichnet**, dass das Folienetikett durch eine Verstreckung uniaxial orientiert ist und dass die Dicke des Folienetikettes weniger als 70 µm beträgt.

15. Verpackung nach Anspruch 14, **dadurch gekennzeichnet, dass** der Verpackungskörper aus Polyethylen gebildet ist.
